Europäisches Patentamt

European Patent Office

Office européen des brevets

(19)

(11) **EP 1 212 190 B1**

(12) **FASCICULE DE BREVET EUROPEEN**

(45) Date de publication et mention
de la délivrance du brevet:
**06.10.2004 Bulletin 2004/41**

(21) Numéro de dépôt: **00951435.7**

(22) Date de dépôt: **24.07.2000**

(51) Int Cl.⁷: **B29D 30/20**, B60C 9/07

(86) Numéro de dépôt international:
**PCT/EP2000/007067**

(87) Numéro de publication internationale:
**WO 2001/008873 (08.02.2001 Gazette 2001/06)**

(54) **PROCEDE DE FABRICATION D'UN PNEUMATIQUE**

VERFAHREN ZUR HERSTELLUNG EINES LUFTREIFENS

METHOD FOR MAKING A TYRE

(84) Etats contractants désignés:
**AT BE CH CY DE DK ES FI FR GB GR IE IT LI LU
MC NL PT SE**

(30) Priorité: **02.08.1999 FR 9910109**

(43) Date de publication de la demande:
**12.06.2002 Bulletin 2002/24**

(73) Titulaires:
• **Sociéte de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeurs:
• **AHOUANTO, Michel
F-63530 Enval (FR)**
• **BESTGEN, Luc
F-63140 Chatel-Guyon (FR)**

(74) Mandataire: **Le Cam, Stéphane
Michelin & Cie,
Service SGD/LG/PI Ladoux
63040 Clermont-Ferrand Cedex 09 (FR)**

(56) Documents cités:
DE-A- 1 729 575       FR-A- 1 508 652
FR-A- 2 178 000       FR-A- 2 784 614
US-A- 3 327 753       US-A- 5 437 321

EP 1 212 190 B1

# Description

L'invention concerne un procédé de fabrication d'un pneumatique comprenant une armature de carcasse dont les éléments de renforcement sont radiaux dans les flancs et obliques par rapport à la direction circonférentielle dans la région de l'armature de sommet. Elle concerne aussi les pneumatiques obtenus par ledit procédé.

Les pneumatiques de type radial, et plus précisément leurs ébauches toriques non vulcanisées, sont habituellement fabriquées par un procédé comportant deux phases distinctes. Dans la première phase, l'ébauche cylindrique d'armature de carcasse est fabriquée sur un tambour de confection cylindrique, ladite ébauche comprenant entre autres l'armature de carcasse elle-même, les gommes et renforts intérieurs à ladite armature ainsi que tous les éléments constituant les bourrelets, éléments que sont les tringles, les profilés et couches de remplissage de bourrelet, armatures de renforcement de bourrelet. Dans une deuxième phase, l'ébauche cylindrique d'armature de carcasse est conformée, dilatée pour prendre une forme torique, forme sur laquelle seront alors posées les éléments constituant l'armature de sommet, les profilés et couches caoutchouteuses séparant ladite armature de sommet de l'armature de carcasse, ainsi que la bande de roulement. L'ébauche torique et non vulcanisée de pneumatique est alors introduite dans un moule de vulcanisation, ladite ébauche subissant une légère conformation supplémentaire pour aboutir aux dimensions finales du pneumatique.

Le procédé en deux phases de fabrication des pneumatiques radiaux a été longtemps considéré comme le seul utilisable industriellement, malgré le fait que, si on compare au procédé en une phase (ou temps) utilisé pour les pneumatiques à carcasse croisée, le procédé en deux temps implique un équipement additionnel plus compliqué, plus coûteux, une main d'oeuvre plus nombreuse, et en conséquence un prix de revient nécessairement plus grand.

C'est pourquoi on a toujours considéré qu'il était intéressant de pouvoir fabriquer des pneumatiques radiaux par un procédé en un temps et en utilisant l'équipement traditionnel de fabrication des pneumatiques à carcasse croisée. Ledit procédé en un temps consiste à assembler sur un même tambour tous les constituants de l'ébauche du pneumatique sous une forme pratiquement cylindrique.

Dans la mesure où les éléments de renforcement de l'armature de carcasse sont des éléments radiaux sur toute la longueur méridienne et où les éléments de renforcement croisés de l'armature de sommet créent avec ceux de l'armature de carcasse une triangulation, la conformation de l'ébauche cylindrique pour parvenir à une ébauche torique est pratiquement impossible, à moins de l'utilisation d'un certain nombre d'artifices tels que la lubrification des différentes couches et ou nappes au moyen, par exemple, de stéarate de zinc en poudre ou en solution dans un solvant, ou la pose entre l'armature de carcasse et l'armature de sommet d'un important matelas de mélange caoutchouteux, artifices qui ont plus d'inconvénients que d'avantages.

Le brevet FR 1 413 102, après avoir constaté que la portion d'armature de carcasse radiale située radialement à l'intérieur de l'armature de sommet pouvait être superflue, décrit un pneumatique comprenant une armature de carcasse ancrée dans chaque bourrelet à un élément annulaire inextensible et constituée d'éléments de renforcement indépendants, disposés d'une part radialement ou sensiblement radialement entre le bourrelet et l'armature de sommet et d'autre part avec une orientation s'éloignant sensiblement de l'orientation radiale sur au moins une partie axiale de la région où s'étend l'armature de sommet. L'armature de carcasse est complétée par une armature de sommet, et la solution la plus simple consiste à avoir une armature de sommet composée d'une seule nappe de sommet formée d'éléments de renforcement dont l'angle d'orientation par rapport à la direction circonférentielle est de signe opposé à celui que font les éléments d'armature de carcasse dans sa portion oblique. Une telle structure de pneumatique peut être réalisée par le procédé de fabrication en un temps. On dispose sur un tambour de confection la nappe de carcasse dont les éléments de renforcement radiaux viennent se placer sensiblement parallèlement aux génératrices dudit tambour. Les tringles de bourrelet sont ensuite mises en place et les bords de nappe de carcasse sont repliés autour des tringles et des gommes de remplissage de bourrelet pour former les retournements de nappe de carcasse. On pose ensuite la nappe de sommet, la direction des éléments de renforcement de sommet faisant un angle convenable avec ceux de la nappe de carcasse et on fait adhérer les deux nappes de carcasse et sommet. On conforme alors l'ébauche cylindrique ainsi obtenue par rapprochement des tringles et gonflement de la membrane du tambour de confection. Les éléments de renforcement de la nappe de carcasse et ceux de la nappe de sommet prennent une configuration angulaire nouvelle dépendant des angles de départ et du taux de conformation dans la zone où les deux nappes se superposent, tandis que les éléments de nappe de carcasse gardent sensiblement leur orientation radiale dans les flancs.

Si ledit procédé peut effectivement permettre l'obtention d'ébauches à plusieurs nappes d'armature de carcasse et plusieurs nappes d'armature de sommet, les éléments de renforcement des dites nappes ne peuvent avoir au sommet que deux orientations angulaires (- β, + γ) ou (+ β, - γ), sans que les dites orientations soient identiques (β ≠ γ). Ledit procédé ne permet donc pas d'une part d'obtenir un pneumatique ayant une unique nappe de sommet exempt de poussées latérales à dérive 0° trop importantes, et d'autre part d'être en présence d'un pneumatique efficace dans toutes les configurations de roulage, du fait que l'orientation des éléments des différentes nappes ne conduit pas à la création de la moindre zone axiale avec présence d'une armature triangulée. Il est exact que la référence citée propose une solution pour remédier aux inconvénients cités en dernier lieu : on peut adjoindre à la structure décrite une autre nappe de sommet dont les éléments de renforcement ont une orientation de signe opposé à celle des éléments de renforcement de la première nappe, mais la pose de ladite deuxième nappe de sommet n'est faite, selon le procédé décrit, que dans un deuxième temps après conformation au diamètre final de l'ébauche torique, c'est-à-dire un procédé identique au procédé de fabrication d'une ébauche à véritable armature triangulée.

L'invention a pour but de remédier aux inconvénients ci-dessus et de permettre l'obtention d'un pneumatique réalisé par un procédé très voisin d'un procédé en un temps, et permettant d'obtenir soit un pneumatique avec une nappe de sommet dont les éléments de renforcement font avec la direction circonférentielle l'angle opposé à celui des éléments de la carcasse radialement sous-jacente, soit un pneumatique ayant une armature de sommet avec des nappes d'éléments de renforcement croisés d'une nappe à la suivante, soit un pneumatique avec une armature de sommet partiellement triangulée.

Conformément à l'invention, le procédé de fabrication d'un pneumatique comportant une armature de carcasse, radiale dans les flancs et dont les éléments de renforcement font avec la direction circonférentielle et radialement sous une armature de sommet, composée d'au moins une couche d'éléments de renforcement faisant un angle $\pm \gamma_2$ avec ladite direction, un angle $\mp \beta_2$ sur une largeur L, consistant à fabriquer initialement une ébauche cylindrique comprenant tous les composants du pneumatique, caractérisé en ce que, au moins :

a) l'on pose sur la partie centrale de diamètre D d'un tambour cylindrique de confection au moins une nappe d'armature de carcasse formée d'éléments de renforcement radiaux,

b) l'on pose les éléments annulaires de bourrelet, inextensibles et de diamètre intérieur $D_3$, les profilés et gommes de remplissage de bourrelet, les armatures de renforcement de bourrelet, et l'on retourne les bords de nappe de carcasse pour former les retournements de carcasse,

c) l'on fait subir à la partie centrale de ladite nappe de carcasse une variation angulaire de ses éléments de renforcement par une préconformation sur ledit tambour en passant du diamètre D à un diamètre supérieur $D_1$, de manière à ce que les dits éléments radiaux deviennent obliques en faisant avec la direction circonférentielle un angle $\mp \beta_1$, ladite variation angulaire de la nappe de carcasse sur la largeur L étant réalisée au moyen d'au moins une nappe auxiliaire N de largeur $L_0$, dite conformatrice, formée d'éléments textiles ou métalliques enrobés dans un mélange de caoutchouc vulcanisé et posée sur le tambour de confection de l'ébauche cylindrique de pneumatique,

d) l'on pose les profilés et couches caoutchouteux entre armature de carcasse et armature de sommet, puis radialement à l'extérieur au moins une nappe de sommet formée d'éléments de renforcement orientés par rapport à la direction circonférentielle des angles $\pm \gamma_1$ ($\mp \gamma_1$), $\gamma_1$ étant tel que $|\gamma_1| - |\beta_1| \leq 7°$,

e) l'on termine en posant le(s) mélange(s) caoutchouteux de bande de roulement et l'on conforme en portant le diamètre intérieur $D_1$ de l'ébauche cylindrique au diamètre intérieur $D_2$, diamètre de l'ébauche torique du pneumatique dans le moule de vulcanisation et du pneumatique vulcanisé.

Le diamètre $D_1$ est d'une part supérieur au diamètre D du tambour de confection, et d'autre part compris entre 0,95 fois et 1,3 fois le diamètre intérieur $D_3$ des éléments annulaires de bourrelet, et la variation angulaire de la nappe de carcasse sur la largeur L est réalisée au moyen d'au moins une nappe auxiliaire de largeur $L_0$, dont les éléments de renforcement font avec la direction circonférentielle un angle $\pm \alpha$.

Préférentiellement, la variation angulaire de l'armature de carcasse radiale sera réalisée au moyen d'un manchon cylindrique vulcanisé et formé de deux nappes auxiliaires dont les éléments de renforcement font avec la direction circonférentielle des angles égaux respectivement à 90° et $\pm \alpha$ ou $\pm \alpha$ et 90°.

De manière avantageuse, la (les) nappe(s) de sommet posée(s) au diamètre $D_1$ aura(ont) une (des) largeur(s) $L_{311}$ et $(L_{322})$ supérieure(s) à la largeur $L_1$ de la nappe conformatrice audit diamètre. Le pneumatique ainsi obtenu par un procédé que l'on peut qualifier de procédé en un temps, présente l'avantage d'avoir une armature de carcasse radiale dans les flancs et oblique radialement sous l'armature de sommet en ayant sous les bords de ladite armature une obliquité variable et croissante en allant axialement vers les bords de l'armature sur une largeur axiale $L_{322} - L_1$, ce qui permet d'obtenir, dans le cas d'une armature de sommet à deux nappes et pour ladite largeur axiale, une triangulation des deux bords d'armature bénéfique pour les performances du pneumatique en roulage.

Les performances seront améliorées si l'on remplace préférentiellement les deux nappes de sommet de largeur $L_{31}$ et $L_{32}$ par une seule nappe d'éléments orientés avec l'angle $\pm \gamma_1$ et de largeur $L_{11}$, et dont les bords sont retournés sur eux mêmes, la présence du retournement étant suffisante pour créer une triangulation sur les bords de l'armature de sommet et donnant, par ailleurs et comme connu en soi, une rigidité supplémentaire des dits bords.

Les caractéristiques de l'invention seront mieux comprises à l'aide de la description qui suit et qui se réfère au dessin, illustrant à titre non limitatif des exemples d'exécution, dessin sur lequel :

* la figure 1 représente schématiquement, vu en section méridienne, une première variante de pneumatique, conforme à l'invention, vulcanisé tel qu'il est dans le moule de vulcanisation,

* la figure 2 représente schématiquement, vu en plan du dessus, les différents éléments de renforcement du pneumatique,

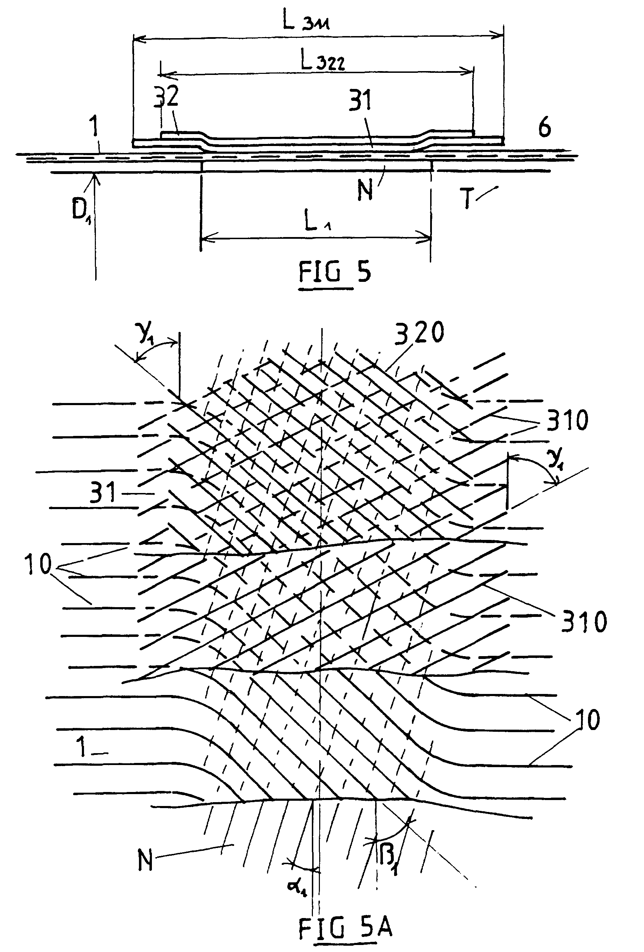

* les figures 3 à 5 représentent schématiquement en section méridienne les différentes étapes de pose sur le tambour des armatures dans l'ordre chronologique, alors que

* les figures 3A à 5A représentent en plan les différentes armatures aux différents étapes des figures 3 à 5,

* les figures 6A et 6B montrent, vue en section méridienne et en plan, une deuxième variante de pneumatique conforme à l'invention.

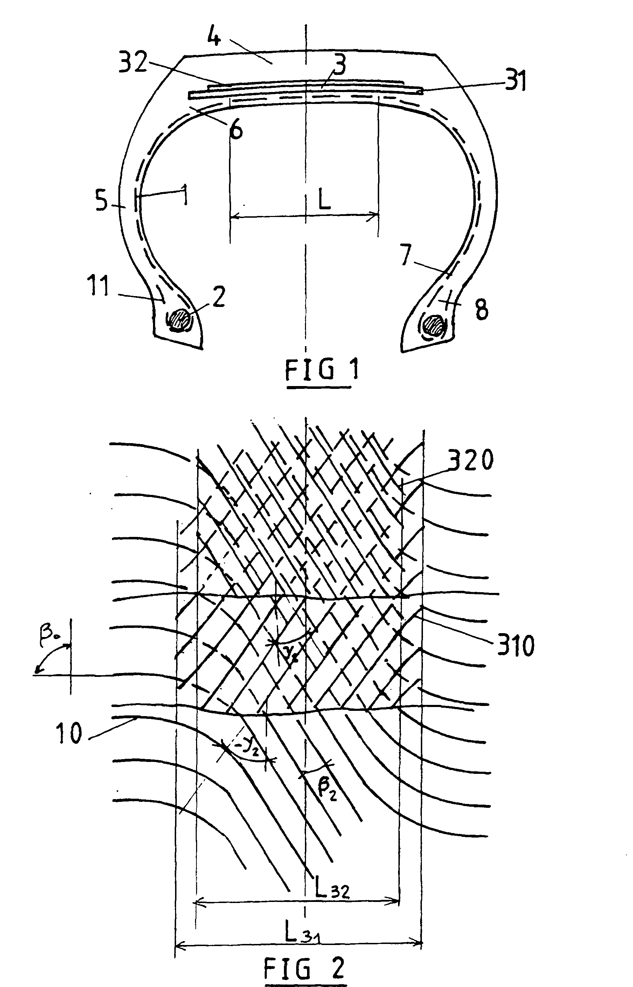

Le pneumatique P de la figure 1 est un pneumatique de petite dimension 175/70 R 13 comprenant une armature de carcasse radiale 1, ancrée dans chaque bourrelet 7 à une tringle 2 pour former un retournement 11, séparé axialement de l'armature de carcasse elle-même par les profilés usuels 8 de mélanges caoutchouteux. Ladite armature 1 est composée, dans le cas décrit, d'une nappe 1 d'éléments de renforcement en polyester, surmontée radialement d'une armature de sommet 3, composée de deux nappes de 31 et 32 formées de câbles métalliques parallèles entre eux dans chaque nappe et croisés d'une nappe à la suivante et de largeurs respectives $L_{31}$ et $L_{32}$. La nappe de sommet 31 la plus proche de l'axe de rotation n'ayant pas la même courbure que la portion de nappe de carcasse sousjacente, les bords de ladite nappe de sommet sont réunis à ladite nappe de carcasse par des profilés 6 de forme sensiblement triangulaire. Le pneumatique P comprend aussi deux flancs 5 réunissant une bande de roulement 4 aux deux bourrelets 7, et à l'intérieur la(les) couche(s) caoutchouteuses de revêtement intérieur.

Les éléments de renforcement 10 de la nappe de carcasse 1 sont, d'une part orientés dans les flancs 5 et les bourrelets 7, comme on peut le voir sur la figure 2, radialement, c'est-à-dire avec un angle $\beta_0$ sensiblement égal à 90° par rapport à la direction circonférentielle du pneumatique, (par convention, il faut entendre par orientation radiale une orientation pouvant différer de ± 15° par rapport à la direction radiale), et d'autre part orientés radialement sous l'armature de sommet 3 d'un angle - $\beta_2$ pratiquement constant sous la largeur L, vue en section méridienne, de la zone de parallélisme entre la nappe de carcasse 1 et la nappe de sommet radialement adjacente 31, angle $\beta_2$ croissant de chaque côté du plan équatorial, en dehors de la dite zone de parallélisme, en allant vers les bords de la nappe de sommet 31, sur une certaine largeur $L_{31}$ - L, jusqu'à devenir égal à $\beta_0$ en extrémité de nappe 31.

Quant aux éléments de renforcement 310 et 320 des nappes de sommet 31 et 32, ils font avec la direction circonférentielle, des angles + $\gamma_2$ et - $\gamma_2$ (le signe moins est utilisé pour signifier de sens opposé) constants sur la largeur L, précédemment définie, et croissant légèrement en allant sur les bords de chaque nappe de sommet, les dits angles étant en valeur absolue égaux entre eux et égaux à $\beta_2$ à 3° près.

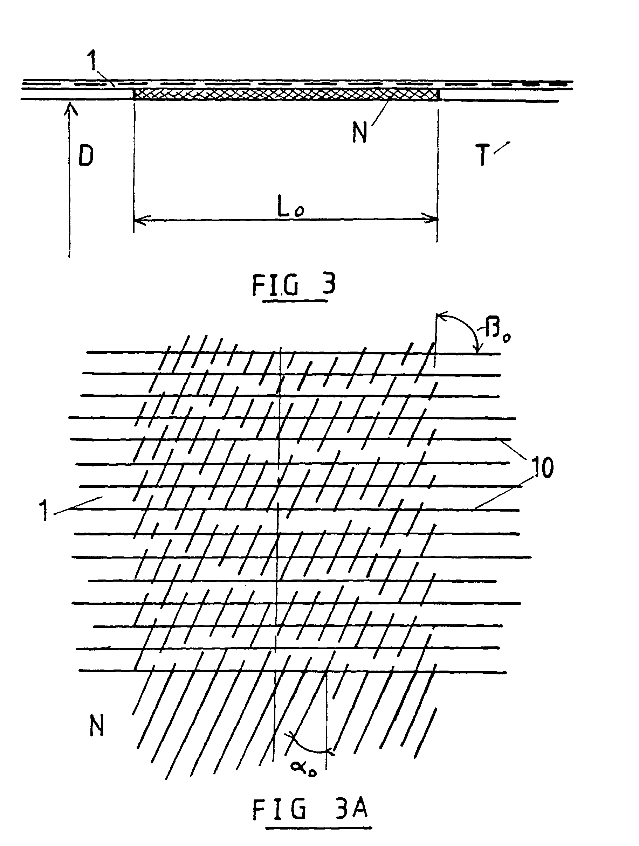

Le pneumatique décrit ci-dessus provient de la vulcanisation d'une ébauche torique de pneumatique obtenue dans le moule de vulcanisation par conformation d'une ébauche cylindrique de pneumatique préparée sur un tambour de confection cylindrique T. La première étape du procédé de fabrication consiste (figure 3) à poser sur le tambour T ayant un développement circonférentiel de $\pi$D une nappe auxiliaire N, dite nappe conformatrice, vulcanisée et formée d'éléments de renforcement en polyamide aromatique faisant avec la direction circonférentielle un angle $\alpha_0$ (figure 3A), égal dans le cas étudié à 9°, et enrobés sur les deux faces d'un mélange de caoutchouc vulcanisé de faible module sécant d'extension, sensiblement égal à 3 MPa, mesuré pour un allongement relatif de 10 %. Ladite nappe conformatrice N cylindrique a une largeur $L_0$. Radialement au dessus, est posée sur ladite nappe N la nappe de carcasse 1 avec ses éléments radiaux 10, en prenant les précautions nécessaires pour qu'il y ait adhésion sur la largeur $L_0$ entre les deux nappes conformatrice N et de carcasse 1. L'emploi d'un manchon de deux nappes auxiliaires vulcanisées, dont les éléments de renforcement feraient avec la direction circonférentielle des angles de 90° et 9° présente précisément, par rapport à l'utilisation d'une seule nappe conformatrice, l'avantage de ne pas exiger entre le manchon et la nappe de carcasse une adhésion quelconque, la pression de contact entre les deux nappes étant suffisante pour conférer à la nappe de carcasse la variation angulaire souhaitée.

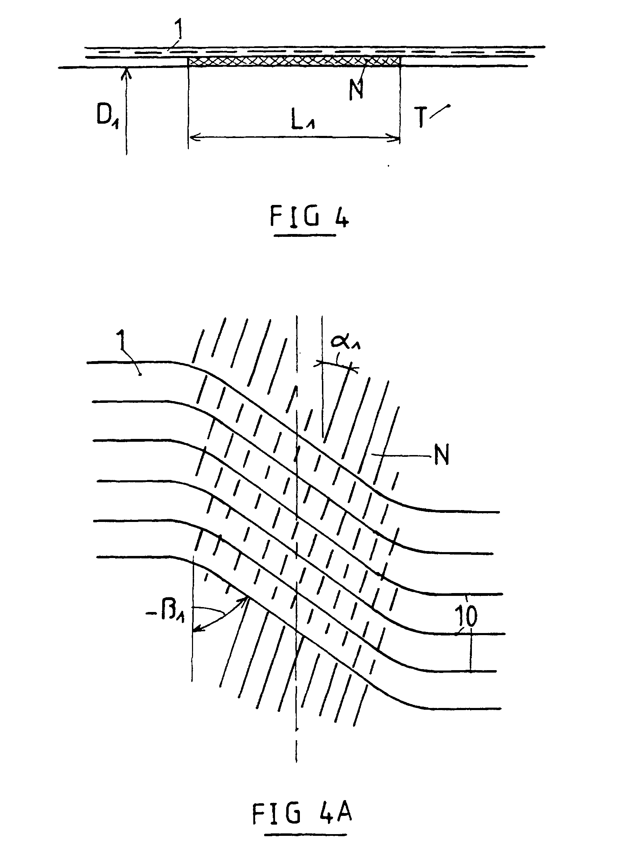

Le diamètre du tambour, dans sa partie centrale, est porté de la valeur D à la valeur $D_1$, égale à 1,1 D ce qui constitue la deuxième étape du procédé (figures 4 et 4A). En faisant adhérer la nappe de carcasse 1 avec ses éléments de renforcement radiaux et la nappe N, moins large et avec ses éléments de renforcement obliques, on obtient après extension dans le sens circonférentiel, causée par l'augmentation de diamètre du tambour, une modification des angles que font avec la direction circonférentielle les éléments de renforcement des deux nappes, dans la partie où les deux nappes adhèrent, alors que ledit angle n'est pas modifié dans la partie où seule est présente la nappe de carcasse 1. Lors de cette préconformation, la largeur axiale $L_0$ de la nappe conformatrice N a diminué pour devenir $L_1$. Les éléments de la nappe N conservent la même orientation mais l'angle $\alpha_0$ diminue pour devenir $\alpha_1$, alors que les éléments de la nappe de carcasse, dans la plus grande partie de la largeur $L_1$ où il y a adhésion, sont orientés à l'opposé pour former un angle - $\beta_1$. Les valeurs des angles $\alpha_1$ et $\beta_1$ dépendent évidemment des valeurs de départ, du taux d'extension $\tau$, et les dites valeurs peuvent être calculées approximativement par les formules :

$$\cos \alpha_1 = \frac{\sin (\beta_0 + \alpha_0) + \sin(\beta_0 - \alpha_0) \, \tau^2}{2\tau \sin \beta_0}$$

avec

$$0 < \beta_0 < \alpha_0 < 180°$$

et

$$\frac{\sin \beta_1}{\sin \beta_0} = \frac{\sin \alpha_1}{\sin \alpha_0}$$

La troisième étape du procédé consiste à poser sur le tambour au diamètre $D_1$ d'une part les profilés 6 de séparation entre les bords des nappes de sommet (31, 32) et de la nappe de carcasse 1, et d'autre part les nappes de sommet elles-mêmes, la nappe de carcasse adhérant toujours parfaitement à la nappe conformatrice N. Les éléments de renforcement (310, 320) des deux nappes de sommet (31, 32), croisés d'une nappe 31 à la suivante 32 font respectivement avec la direction circonférentielle des angles $\gamma_1$ et - $\gamma_1$, dont les valeurs absolues sont égales à la valeur de $\beta_1$. Les largeurs axiales de pose $L_{311}$ et $L_{322}$ des deux nappes 31 et 32 sont supérieures à la largeur $L_1$ de la zone d'adhésion entre nappe conformatrice N et nappe de carcasse 1 d'une quantité inférieure à 80 % de la largeur $L_1$, et dans le cas décrit égale à 53 % de $L_1$, les deux largeurs $L_{311}$ et $L_{322}$ étant différentes entre elles d'une quantité pouvant varier entre 0 % et 10 % de la plus grande largeur, par exemple $L_{311}$.

Après la pose de la bande de roulement 4 ainsi que de toutes les couches de caoutchouc nécessaires pour terminer la confection dudit pneumatique, la quatrième étape consiste alors à dégager de la nappe conformatrice N l'ébauche de pneumatique qui vient d'être constituée, par remise du tambour de confection T au diamètre D, l'adhésion entre nappe N vulcanisée et la nappe de carcasse non vulcanisée étant suffisante pour obtenir la modification angulaire souhaitée, mais non suffisamment élevée pour empêcher la désolidarisation entre les deux nappes.

L'ébauche cylindrique de pneumatique est ensuite disposée dans le moule de vulcanisation adapté. Ladite ébauche est alors expansée à un diamètre $D_2$ qui est le diamètre intérieur, mesuré dans le plan équatorial, du pneumatique vulcanisé. La nappe de carcasse 1 ainsi que les nappes de sommet 31 et 32 sont soumis à une extension circonférentielle qui conduit à une modification des angles de leurs éléments de renforcement respectifs : les angles - $\beta_1$, + $\gamma_1$, - $\gamma_1$ deviennent - $\beta_2$, + $\gamma_2$, - $\gamma_2$. Dans l'exemple décrit, les valeurs des différents angles sont résumées dans le tableau suivant :

| + $\alpha_0 = 9°$ | + $\alpha_1 = 8{,}6°$ | |
|---|---|---|
| $\beta_0 = 90°$ | - $\beta_1 = 56°$ | - $\beta_2 = 22°$ |
| | + $\gamma_1 = 54°$ | + $\gamma_2 = 20°$ |
| | - $\gamma_1 = 54°$ | - $\gamma_2 = 20°$ |

Quant aux largeurs axiales $L_{311}$ et $L_{322}$, elles deviennent respectivement $L_{31}$ et $L_{32}$ ; la largeur d'adhésion $L_1$ devient sensiblement la largeur L de la zone de parallélisme entre nappe de carcasse 1 et armature de sommet 3. En dehors de ladite zone et du fait que les largeurs $L_{311}$ et $L_{322}$ aient été choisies supérieures à $L_1$, il se forme une triangulation entre les éléments de renforcement 10 de la nappe de carcasse 1 qui ont une orientation très voisine de 90°, alors que les éléments de renforcement des bords de nappes de sommet 31 et 32 font avec la direction circonférentielle des angles supérieurs à + $\gamma_2$ et - $\gamma_2$ d'une quantité variable et approximativement comprise entre 0° et 20°. La largeur axiale de cette partie triangulée étant modérée, la conformation du pneumatique à son développement final n'est en rien gênée.

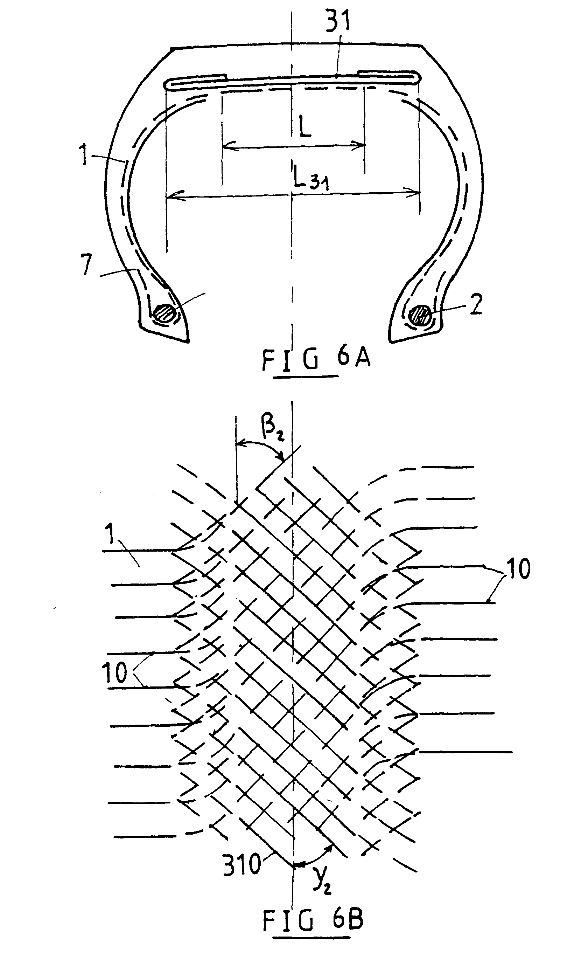

Sur les figures 6A et 6B est montrée, vue en section méridienne et en plan, une deuxième variante de pneumatique pouvant être réalisé par le procédé décrit ci-dessus. Ledit pneumatique comprend, comme le précédent, une armature de carcasse 1 ancrée dans chaque bourrelet 7 à un élément annulaire inextensible 2 et constituée d'éléments de renforcement 10 indépendants, disposés d'une part radialement ou sensiblement radialement entre le bourrelet 7 et le sommet du pneumatique et d'autre part avec une orientation $\mp$ $\beta_2$, par rapport à la direction circonférentielle, sur au moins la largeur axiale L de la zone de parallélisme entre l'armature de carcasse 1 et une armature de sommet 3. Ladite armature de sommet 3 est composée d'une unique nappe de sommet 31, formée d'éléments de renforcement 310 faisant avec la direction circonférentielle un angle égal à ± $\gamma_2$, ladite nappe 31 ayant des bords retournés sur eux-mêmes et la distance axiale entre retournements $L_{31}$ étant supérieure à la largeur L.

**Revendications**

1. Procédé de fabrication d'un pneumatique comportant une armature de carcasse (1), radiale dans les flancs et dont les éléments de renforcement font avec la direction circonférentielle et radialement sous une armature de sommet (3), composée d'au moins une couche (31, 32) d'éléments de renforcement (310, 320) faisant un angle $\pm \gamma_2$ avec ladite direction, un angle $\mp \beta_2$, consistant à fabriquer initialement une ébauche cylindrique comprenant tous les composants du pneumatique, **caractérisé en ce que**, au moins :

   a) l'on pose sur la partie centrale de diamètre D d'un tambour cylindrique de confection au moins une nappe d'armature de carcasse (1) formée d'éléments de renforcement radiaux,

   b) l'on pose les éléments annulaires (2) de bourrelet, inextensibles et de diamètre intérieur $D_3$, les profilés et gommes (8) de remplissage de bourrelet, les armatures de renforcement de bourrelet, et l'on retourne les bords de nappe de carcasse (1) pour former les retournements de carcasse (11),

   c) l'on fait subir à la partie centrale de ladite nappe (1) une variation angulaire de ses éléments de renforcement (310) par une préconformation sur ledit tambour T en passant du diamètre D à un diamètre supérieur $D_1$, de manière à ce que les dits éléments radiaux (310) deviennent obliques en faisant avec la direction circonférentielle un angle $\mp \beta_1$, ladite variation angulaire de la nappe de carcasse (1) sur la largeur L étant réalisée au moyen d'un manchon d'au moins une nappe auxiliaire N de largeur $L_0$, dite conformatrice, formée d'éléments métalliques ou textiles enrobés dans un mélange de caoutchouc vulcanisé et posée sur le tambour de confection T de l'ébauche cylindrique de pneumatique,

   d) l'on pose les profilés (6) et gommes caoutchouteux entre armature de carcasse (1) et armature de sommet (3), puis radialement à l'extérieur au moins une nappe de sommet (31, 32) formée d'éléments de renforcement (310, 320) orientés par rapport à la direction circonférentielle respectivement des angles $\pm \gamma_1$ ($\mp \gamma_1$), $\gamma_1$ étant tel que $|\gamma_1| - |\beta_1| \leq 7$,

   e) l'on termine en posant le(s) mélange(s) caoutchouteux de bande de roulement (4) et l'on conforme en portant le diamètre intérieur $D_1$ de l'ébauche cylindrique au diamètre intérieur $D_2$, diamètre de l'ébauche torique du pneumatique dans le moule de vulcanisation et du pneumatique vulcanisé.

2. Procédé selon la revendication 1, **caractérisé en ce que** le diamètre $D_1$ est, d'une part supérieur au diamètre D du tambour de confection, et d'autre part compris entre 0,95 fois et 1,3 fois le diamètre intérieur $D_3$ des éléments annulaires (2) de bourrelet.

3. Procédé selon la revendication 1, **caractérisé en ce** la variation angulaire de l'armature de carcasse radiale (1) est réalisée au moyen d'un manchon cylindrique vulcanisé et formé de deux nappes auxiliaires N, dont les éléments de renforcement font avec la direction circonférentielle des angles égaux respectivement à 90° et $\pm \alpha$ ou $\pm \alpha$ et 90°.

4. Procédé selon la revendication 1, **caractérisé en ce que** la(les) nappe(s) de sommet (31, 32) posée(s) au diamètre $D_1$ a(ont) une(des) largeur(s) $L_{311}$, $L_{322}$ supérieure(s) à la largeur $L_1$ de la nappe conformatrice N.

5. Pneumatique obtenu par le procédé selon la revendication 1, et comprenant une armature de carcasse (1), ancrée dans chaque bourrelet (7) à un élément annulaire inextensible (2), et constituée d'éléments de renforcement (10) indépendants, disposés d'une part radialement ou sensiblement radialement entre le bourrelet (7) et le sommet du pneumatique et d'autre part avec une orientation $\mp \beta_2$, par rapport à la direction circonférentielle, sur au moins la largeur axiale L de la zone de parallélisme entre l'armature de carcasse (1) et une armature de sommet (3), ladite armature (3) de sommet étant composée d'au moins une nappe de sommet (31, 32), formée d'éléments de renforcement (310, 320) faisant avec la direction circonférentielle des angles égaux à $\pm \gamma_2$ ($\mp \gamma_2$), $\gamma_2$ étant en valeur absolue égal à $\beta_2$ à 3° près, et dont la(les) largeur(s) axiale(s) $L_{31}$ ($L_{32}$) est(sont) supérieure(s) à la largeur L.

6. Pneumatique obtenu par le procédé selon la revendication 1, et comprenant une armature de carcasse (1) ancrée dans chaque bourrelet (7) à un élément annulaire inextensible (2) et constituée d'éléments de renforcement (10) indépendants, disposés d'une part radialement ou sensiblement radialement entre le bourrelet (7) et le sommet du pneumatique et d'autre part avec une orientation $\mp \beta_2$, par rapport à la direction circonférentielle, sur au moins la largeur axiale L de la zone de parallélisme entre l'armature de carcasse (1) et une armature de sommet (3), ladite armature (3) de sommet étant composée d'une nappe de sommet (31), formée d'éléments de renforcement (310) faisant avec la direction circonférentielle un angle égal à $\pm \gamma_2$, ladite nappe (31) ayant des bords retournés sur eux-mê-

mes, la distance axiale $L_{31}$ entre retournements étant supérieure à la largeur L.

**Patentansprüche**

1. Verfahren zur Herstellung eines Luftreifens, der eine Karkassenbewehrung (1) aufweist, die in den Flanken radial verläuft und deren Verstärkungselemente mit der Umfangsrichtung und in radialer Richtung unter einer Scheitelbewehrung (3), die aus mindestens einer Lage (31, 32) von Verstärkungselementen (310, 320) aufgebaut wird, die mit dieser Richtung einen Winkel $\pm \gamma_2$ einnehmen, einen Winkel $\mp \beta_2$ bildet, das darin besteht, zunächst einen zylindrischen Rohling herzustellen, der alle Bestandteile des Luftreifens aufweist, **dadurch gekennzeichnet, dass** zumindest die folgenden Schritte durchgeführt werden:

   a) im zentralen Bereich einer zylindrischen Konfektionstrommel mit dem Durchmesser D wird mindestens eine Karkassenbewehrungslage (1) angebracht, die von radialen Verstärkungselementen gebildet wird,
   b) die ringförmigen, nicht dehnbaren Elemente (2) des Wulstes mit einem Innendurchmesser D3, die Profile und Füllgummis des Wulstes (8) und Wulstverstärker werden angebracht, und die Ränder der Karkassenlage(1) werden zur Bildung des Hochschlags (11) der Karkasse umgeschlagen,
   c) im zentralen Bereich der Karkassenlage (1) wird durch Vorverformung an der Trommel eine Änderung des Winkels ihrer Verstärkungselemente (310) vorgenommen, indem von dem Durchmesser D auf einen größeren Durchmesser $D_1$ so übergegangen wird, dass die radialen Elemente (310) schräg angeordnet werden und mit der Umfangsrichtung einen Winkel $\mp \beta_1$ einnehmen, wobei die Winkeländerung der Karkassenlage (1) über die Breite L mit Hilfe mindestens einer Manschette aus einer zusätzlichen Lage N der Breite Lo bewirkt wird, die auch als Verformungslage bezeichnet wird und aus umhüllten Textilelementen oder Metallelementen in einer vulkanisierten Kautschukmischung besteht und an der Konfektionstrommel für den zylindrischen Reifenrohling angebracht ist,
   d) die Profilteile (6) und die Kautschuklagen zwischen Karkassenbewehrung (1) und Scheitelbewehrung (3) werden angebracht und anschließend wird in radialer Richtung außen mindestens eine Scheitellage (31,32) vorgesehen, die aus Verstärkungselementen (310, 320) gebildet wird, die in Bezug auf die Umfangsrichtung in Winkeln $\pm \gamma_1$ ($\mp \gamma_1$) orientiert sind, wobei $\gamma_1$ so gewählt ist, dass gilt: $|\gamma_1|$ - $|\beta_1|$ $\leq$ 7, und
   e) der Aufbau wird fertig gestellt, indem die Kautschukmischung(en) des Laufstreifens (4) angebracht werden, und geformt, indem der Innendurchmesser $D_1$ des zylindrischen Rohlings auf den Innendurchmesser $D_2$ gebracht wird, d.h. dem Durchmesser des torusförmigen Reifenrohlings in der Vulkanisationsform und des vulkanisierten Reifens.

2. Verfahren nach Anspruch 1, **dadurch gekennzeichnet, dass** der Durchmesser $D_1$ einerseits größer ist als der Durchmesser D der Konfektionstrommel und andererseits im Bereich des 0,95- bis 1,3-fachen des Innendurchmessers $D_3$ der ringförmigen Elemente (2) des Wulstes liegt.

3. Verfahren nach Anspruch 1, **dadurch gekennzeichnet, dass** die Winkeländerung der radialen Karkassenbewehrung (1) mittels einer vulkanisierten zylindrischen Manschette bewirkt wird, die aus zwei zusätzlichen Lagen N besteht, deren Verstärkungselemente mit der Umfangsrichtung Winkel von 90° bzw. $\pm \alpha$ oder $\pm \alpha$ bzw. 90° einnehmen.

4. Verfahren nach Anspruch 1, **dadurch gekennzeichnet, dass** die bei Durchmesser $D_1$ angebrachte(n) Scheitellage(n) (31,32) eine Breite bzw. Breiten $L_{311}$, $L_{322}$ größer der Breite $L_1$ der Verformungslage N aufweist (aufweisen).

5. Luftreifen, der nach dem Verfahren nach Anspruch 1 erhalten wird und eine Karkassenbewehrung (1) enthält, die in jedem Wulst (7) an einem nicht dehnbaren ringförmigen Element (2) verankert ist und aus unabhängigen Verstärkungselementen (10) besteht, die einerseits zwischen dem Wulst (7) und dem Scheitel des Reifens radial oder im Wesentlichen radial verlaufen und andererseits in Bezug auf die Umfangsrichtung über zumindest die axiale Breite L des Parallelitätsbereichs von Karkassenbewehrung (1) und Scheitelbewehrung (3) mit einem Winkel von $\mp \beta_2$ orientiert sind, wobei die Scheitelbewehrung (3) aus mindestens einer Scheitellage (31, 32) aufgebaut ist, die aus Verstärkungselementen (310, 320) gebildet wird, die mit der Umfangsrichtung Winkel von $\pm \gamma_2$ ($\mp \gamma_2$) bilden, wobei $\gamma_2$ einen Absolutwert aufweist, der auf etwa 3° genau $\beta_2$ entspricht, wobei die axiale(n) Breite (n) $L_{31}$ ($L_{32}$) größer als die Breite L ist (sind).

6. Luftreifen, der nach dem Verfahren nach Anspruch 1 erhalten wird und eine Karkassenbewehrung (1) enthält, die in jedem Wulst (7) an einem nicht dehnbaren ringförmigen Element (2) verankert ist und aus unabhängigen Verstärkungselementen (10) besteht, die einerseits zwischen dem Wulst (7) und dem Scheitel des Reifens radial oder im Wesentlichen radial verlaufen und andererseits in Bezug auf die Umfangsrichtung über zumindest die axiale Breite L des Parallelitätsbereichs von Karkassenbewehrung (1) und Scheitelbewehrung (3) mit einem Winkel von $\mp \beta_2$ orientiert sind, wobei die Scheitelbewehrung (3) aus einer Scheitellage (31) besteht, die aus Verstärkungselementen (310) gebildet wird, die mit der Umfangsrichtung einen Winkel $\pm \gamma_2$ bilden, wobei die Lage (31) auf sich selbst umgeschlagene Ränder aufweist und wobei der axiale Abstand $L_{31}$ zwischen den umgeschlagenen Rändern größer als die Breite L ist.

## Claims

1. A process for manufacturing a tyre comprising a carcass reinforcement (1) which is radial in the sidewalls and the reinforcement elements of which form with the circumferential direction and radially beneath a crown reinforcement (3) which is composed of at least one layer (31, 32) of reinforcement elements (310, 320) forming an angle $\pm\gamma_2$ with said direction, an angle $\mp\beta_2$, consisting in initially manufacturing a cylindrical blank comprising all the components of the tyre, **characterised in that**, at least:

   a) at least one carcass reinforcement ply (1) formed of radial reinforcement elements is laid on the central part of diameter D of a cylindrical building drum,

   b) the annular bead elements (2), which are inextensible and have an internal diameter $D_3$, the profiled elements and bead filler rubbers (8), the bead reinforcement armatures, are laid, and the edges of the carcass ply (1) are turned up to form the carcass upturns (11),

   c) the central part of said ply (1) is subjected to an angular variation of its reinforcement elements (310) by pre-shaping on said drum T, passing from the diameter D to a greater diameter $D_1$, such that said radial elements (310) become oblique, forming with the circumferential direction an angle $\mp \beta_1$, said angular variation of the carcass ply (1) over the width L being effected by means of a sleeve consisting of at least one auxiliary ply N of width $L_0$, referred to as a shaping ply, which is formed of textile or metallic elements coated in a vulcanised rubber mix and laid on the building drum T for the cylindrical tyre blank,

   d) the profiled elements (6) and rubbers are laid between the carcass reinforcement (1) and crown reinforcement (3), then radially to the outside at least one crown ply (31, 32) is laid formed of reinforcement elements (310, 320) oriented relative to the circumferential direction by the angles $\pm \gamma_1$ ($\pm \gamma_1$) respectively, $\gamma_1$ being such that $|\gamma_1| - |\beta_1| \leq 7°$,

   e) it is finished by laying the rubber mix(es) of the tread (4) and it is shaped by bringing the internal diameter $D_1$ of the cylindrical blank to the internal diameter $D_2$, which is the diameter of the toric blank of the tyre in the vulcanisation mould and of the vulcanised tyre.

2. A process according to Claim 1, **characterised in that** the diameter $D_1$ is firstly greater than the diameter D of the building drum, and secondly is between 0.95 times and 1.3 times the internal diameter $D_3$ of the annular bead elements (2).

3. A process according to Claim 1, **characterised in that** the angular variation of the radial carcass reinforcement (1) is effected by means of a cylindrical sleeve which is vulcanised and formed of two auxiliary plies N, the reinforcement elements of which form angles equal respectively to 90° and $\pm \alpha$ or $\pm \alpha$ and 90° with the circumferential direction.

4. A process according to Claim 1, **characterised in that** the crown ply (plies) (31, 32) laid on the diameter $D_1$ has/have a width (widths) $L_{311}$, $L_{322}$ greater than the width $L_1$ of the shaping ply N.

5. A tyre obtained by the process according to Claim 1, and comprising a carcass reinforcement (1) anchored within each bead (7) to an inextensible annular element (2) and formed of independent reinforcement elements (10), arranged firstly radially or substantially radially between the bead (7) and the crown of the tyre and secondly with an orientation $\pm \beta_2$, relative to the circumferential direction, over at least the axial width L of the zone of parallelism between the carcass reinforcement (1) and a crown reinforcement (3), said crown reinforcement (3) being formed of at least one crown ply (31, 32) formed of reinforcement elements (310, 320) forming with the circumferential direction angles equal to $\pm \gamma_2$ ($\mp\gamma_2$), $\gamma_2$ being equal in absolute value to $\beta_2$ to within 3°, and the axial width(s) $L_{31}$ ($L_{32}$) of which is (are) greater than the width L.

6. A tyre obtained by the process according to Claim 1, and comprising a carcass reinforcement (1) anchored within each bead (7) to an inextensible annular element (2) and formed of independent reinforcement elements (10), arranged firstly radially or substantially radially between the bead (7) and the crown of the tyre and secondly with an orientation $\pm \beta_2$, relative to the circumferential direction, over at least the axial width L of the zone of parallelism between the carcass reinforcement (1) and a crown reinforcement (3), said crown reinforcement (3) being formed of a crown ply (31) formed of reinforcement elements (310) forming with the circumferential direction an angle equal to $\pm \gamma_2$, said ply (31) having edges turned up on themselves, the axial distance $L_{31}$ between upturns being greater than the width L.

FIG 1

FIG 2

FIG 3

FIG 3A

$D_1$

$L_1$

N

T

$$\underline{FIG\ 4}$$

1

$\alpha_1$

N

$-\beta_1$

10

$$\underline{FIG\ 4A}$$

FIG 5

FIG 5A

FIG 6A

FIG 6B